# EUROPÄISCHE PATENTSCHRIFT

(11) **EP 2 721 724 B1**
(45) Veröffentlichungstag und Bekanntmachung des Hinweises auf die Patenterteilung: **05.02.2020**
(21) Anmeldenummer: 12725731.9
(22) Anmeldetag: 01.06.2012
(51) Int. Cl.: H02K 15/085

(54) **VERFAHREN UND VORRICHTUNG ZUR BEWICKLUNG EINES ELEKTROMOTOR-BLECHPAKETS**
METHOD AND APPARATUS FOR WINDING A LAMINATED CORE OF AN ELECTRIC MOTOR
PROCÉDÉ ET DISPOSITIF D'ENROULEMENT D'UN PAQUET DE TÔLES DE MOTEUR ÉLECTRIQUE

(30) Priorität: 14.06.2011 DE 102011077505; 17.01.2012 DE 102012200581
(43) Veröffentlichungstag der Anmeldung: 23.04.2014
(73) Patentinhaber: Robert Bosch GmbH, 70442 Stuttgart (DE)
(72) Erfinder: RADER, Michael, Engels 413105 (US); HAGEDORN, Juergen, 32312 Lübbecke (DE)
(86) Internationale Anmeldenummer: PCT/EP2012/060399
(87) Internationale Veröffentlichungsnummer: WO 2012/171819

(56) Entgegenhaltungen:
- EP-A1- 1 225 679
- EP-A2- 0 553 899
- EP-A2- 1 251 628
- WO-A1-2010/030907

## Beschreibung

### Stand der Technik

Die vorliegende Erfindung betrifft eine Vorrichtung und ein Verfahren zur Bewicklung eines Blechpakets mit einer Magnetspule für einen Elektromotor, wobei ein leitfähiger, isolierter Spulendraht in eine oder mehrere Nuten, insbesondere Polhornnuten einer Wicklungsoberfläche des Blechpakets eingewickelt wird.

Aus dem Stand der Technik ist beispielsweise bekannt, Elektromotoren, die vornehmlich in Elektrowerkzeugmaschinen, wie Winkelschleifer, Bohrmaschinen, Bohrhammer, Elektromotoren, eingesetzt werden, beispielsweise Reihen-, Neben- oder Doppelschluss-Motoren, deren Statoren geteilt sind, und die zusammengefügt werden können. Hierzu ist das Blechpaket des Stators, das die Magnetfeldlinien lenkt und als Träger der Statorspulen dient, zwei- oder mehrteilig aufgebaut. Somit kann jedes Blechpaketteil mit einer Magnetspule bewickelt werden, und beim Zusammenfügen der einzelnen Blechpakete wird ein zylinderförmiger Stator gebildet, in dessen Innendurchmesser auf sogenannten Polhörnern Magnetspulen aufgewickelt sind.

Zum Aufbringen der Magnetspulen auf das Blechpaket des Stators oder auch des Läufers, wird üblicherweise ein Nadelwickelverfahren oder ein Flyerwickelverfahren eingesetzt. Beim Nadelwickelverfahren wird ein geschlossener Stator oder ein Läuferpaket mit Hilfe einer oder zweier Wickelnadeln bewickelt. Ein solches Nadelwickelverfahren ist beispielsweise aus der EP 0 553 899 A2 und der EP 1 251 628 A2 bekannt.

Beim Flyerwickelverfahren wird mit Hilfe eines Flyers zunächst eine Spule auf eine entsprechend ausgelegte Wickelform gewickelt, wobei entweder der Flyerarm um das (feststehende) Blechpaket rotiert, oder das Blechpaket gegenüber einem feststehenden Flyerarm rotiert. Nach dem Wickeln wird die Spule mechanisch geformt und mit Hilfe eines Werkzeugs in die vorgesehenen Nutschlitze eines Stators eingeführt. Derartige Statoren sind der besseren Zugänglichkeit wegen in der Regel zwei- oder mehrteilig ausgeführt. Nach dem Wickelvorgang werden die Drahtenden mit Schrumpfschläuchen versehen und mit Crimpkontakten konfektioniert. Für eine Massenfertigung ist es bekannt, die Magnetspule zunächst zu konfektionieren, und als Ganzes in die Polhörner eines Blechpaketes einzusetzen. Hierzu wird der isolierte Spulendraht zunächst auf eine "Magnetspulen-Halteeinrichtung" gewickelt, der Spule ein definiertes Maß vorgegeben, und anschließend in Polhornnuten des Stators eingesetzt bzw. eingehebelt. Bei diesem Einbauprozess kommt es des öfteren zu Beschädigungen des Isolierpapiers, mit dem die Magnetspule gegenüber dem Statorblechpaket isoliert werden soll oder zu Verletzungen der Isolationsschicht des Spulendrahts durch scharfe Kanten des Blechpakets, so dass ein Ausfall oder ein Kurzschluss des Elektromotors hervorgerufen werden kann. Nach dem Einsetzen der Magnetspule werden die Spulenform und die Wickelköpfe der Spule mechanisch verformt, wodurch die Spulendrähte beschädigt oder gedehnt und verjüngt werden, und der Biegeradius des Drahtes verändert wird. Durch die mechanische Nachbearbeitung der Magnetspule durch Umsetzen von der Halteeinrichtung auf das Blechpaket, können Beschädigungen der Spule, des Spulendrahts oder des Isolierpapiers auftreten, es sind zusätzliche arbeits- und zeitintensive Arbeitsschritte notwendig und die Qualität und Lebensdauer des Elektromotors kann beeinträchtigt werden.

Ausgehend von dem oben genannten Problem ist es Aufgabe der Erfindung, eine Flyerwickelvorrichtung sowie ein Verfahren zur Bewicklung dienes Blechpakets mittels einer Flyerwickelvorrichtung vorzuschlagen, bei dem die Magnetspule unmittelbar und mit optimaler Formgebung in einem Blechpaket eines Stators oder Läufers gewickelt werden kann, so dass nachträgliche mechanische Veränderungen vermieden und die Qualität der Magnetspule sowie des Elektromotors verbessert werden kann.

### Offenbarung der Erfindung

In einem ersten erfinderischen Aspekt wird eine Vorrichtung in Form einer Flyerwickelvorrichtung zur Bewicklung eines Blechpakets mit einer Magnetspule für einen Elektromotor nach Anspruch 1 vorgeschlagen, wobei ein leitfähiger, isolierter Spulendraht in eine oder mehrere Nuten, insbesondere Polhornnuten, einer Wicklungsoberfläche des Blechpakets eingewickelt wird. Die Vorrichtung umfasst eine Halteeinrichtung zur Fixierung des zu bewickelnden Blechpakets während des Wicklungsvorgangs, und eine Gegenhalteeinrichtung. Das Blechpaket ist so ausgebildet ist, dass zwei oder mehr Blechpakete zusammengesetzt einen Stator oder Läufer ergeben. Zumindest eine Wicklungsunterstützungsoberfläche der Gegenhalteeinrichtung kann im Wesentlichen formkomplementär zur dem aus der Polnut herausragenden Wicklungsoberflächenbereich des Blechpakets ausgeformt sein. Die Wicklungsunterstützungsoberfläche ist relativ zur Wicklungsoberfläche des Blechpakets verfahr- oder verschwenkbar. Die Wicklungsunterstützungsoberfläche weist zumindest ein Spulenformgebungselement auf, wodurch die Wickellage des Spulendrahts bzw. eine Form eines aus der Nut ragender Teilbereichs der Spule während des Wicklungsvorgangs vorgebbar ist.

Die Bewicklungsvorrichtung sieht demnach ein direktes Bewickeln des Blechpakets vor, wobei das Blechpaket in eine Halteeinrichtung eingespannt oder eingelegt wird, und mittels einer Gegenhalteeinrichtung, die eine im Wesentlichen formkomplementäre Wicklungsunterstützungsoberfläche aufweist, und die gegenüber dem aus der Polnut herausragenden Bereich der Wicklungsoberfläche des Blechpakets derart verfahr- oder verschwenkbar ist, dass ein Wicklungsspalt ausgebildet werden kann, in den ein Spulendraht eingewickelt werden kann, so dass ein unmittelbares Bewickeln des Spulendrahtes in die Nuten des Blechpakets zur Ausbildung einer Magnetspule durchführbar ist. Es kann die Vorrichtung durch Verfahren oder Verschwenken der Gegenhalteeinrichtung gegenüber der Halteeinrichtung zur Ausbildung des Wickelspaltes in eine Arbeitsposition gebracht werden. Mittels einer Flyerwickeltechnik wird anschliessend ein Draht zur Ausbildung einer Magnetspule in den Wicklungsspalt eingewickelt. Durch die auf der Wicklungsunterstützungsoberfläche angeordneten ein oder mehreren Spulenformgebungselemente, beispielsweise Kanten, Nasen, Ausnehmungen im Bereich der Längskanten und Kopfenden von Polhörnern wird im Laufe des Einwicklungsvorgangs des Spulendrahts an solchen kritischen Stellen, an denen aus die Magnetspule aus den Nuten herausragt, eine Formbeeinflussung des Spulenquerschnitts ermöglicht, die eine optimale Anpassung der Magnetspule an das Blechpaket und an einen Magnetfeld-optimierten Spulenquerschnitt gewährleistet. Des Weiteren können Spulenformgebungselemente derart angebracht sein, dass die Wicklungsköpfe bereits in Form ausgerichtet werden, d.h. deren Krümmungsradius und Abwinkelneigung vorgegeben wird. Ohne Spulenformgebungselemente würde ein Spulendraht den Wickelraum nicht vollständig ausfüllen, da aufgrund des Sehnenverhaltens des Drahts bei gekrümmten Wicklungen dieser immer den kürzesten Weg nimmt, und dadurch das zur Verfügung stehende Wickelvolumen nicht vollständig ausfüllt. Durch eine geeignete Ausformung der Spulenformgebungselemente, beispielsweise Nasen, Vertiefungen, Nuten, Stege und dergleichen kann der Draht im Laufe des Wicklungsvorgangs derart ausgerichtet und in eine gewünschte Form gebracht werden, dass selbst bei hohen Drahtspannungen eine gewünschte Formgebung, insbesondere im Freivolumen, der Magnetspule erreicht werden kann. Durch das direkte Bewickeln entfällt das Herausnehmen, Einhebeln und Ausformen der Magnetspule, wobei die Eigenstabilität der Magnetspule erhöht und die Fertigungsgeschwindigkeit verkürzt werden kann. Durch das direkte Bewickeln können Beschädigungen des Isolierpapiers oder der Spulendrahtisolierung vermieden werden. Die Wickelköpfe können bereits während des Wicklungsvorgangs ausgeformt werden, so dass kein Biegeprozess, der zum Verjüngen oder zur Beschädigung des Drahtes führt, durchgeführt werden muss. Somit können optimal geformte Magnetspulen erreicht und somit bei gleicher Baugröße magnetisch optimierte Statoren und elektrisch effizientere Elektrowerkzeugmaschinen bereitgestellt werden.

Entsprechend einer vorteilhaften Ausführung kann das Spulenformgebungselement eine Nut, eine Rippe, eine Vertiefung, einen Spalt, einen Absatz, eine Nase oder ähnliches umfassen, wobei bevorzugt das Spulenformgebungselement abgerundete Ecken und Kanten aufweisen kann. Aufgrund hoher Drahtspannung können Ecken und Kanten dazu führen, dass die Isolation des Spulendrahts beschädigt sein kann. Daher ist es vorteilhaft, dass die Spulenformgebungselemente abgerundete Ecken und Kanten aufweisen, um die Isolation nicht zu beschädigen. Je nach Ausformung des Blechpakets bzw. der Eigenart der aufzuwickelnden Spule können die Spulenformgebungselemente derart ausgeformt sein, dass eine gewünschte Spulenformgebung, insbesondere im Freivolumen, der Magnetspule erreicht werden kann. Des Weiteren ist während des Wicklungsvorgangs denkbar, dass sich die Wicklungsunterstützungsoberfläche gegenüber dem aus der Polnut herausragenden Teilbereich der Wicklungsoberfläche bewegt, bzw. verfährt, so dass eine dynamische Spulenquerschnittsbildung und Ausformung der Magnetspule erreichbar ist.

Gemäß einer vorteilhaften Ausgestaltung der Vorrichtung kann das Spulenformgebungselement derart ausgeformt sein, dass eine Verdickung des Spulenquerschnitts des aus der Nut ragenden Teilbereichs der Spule erreichbar und/oder eine Ausrichtung und Formgebung eines oder mehrerer Spulenköpfe bewirkbar ist. Somit kann durch eine definierte Formgestaltung des Spulenformgebungselements, beispielsweise durch Vorsehen von Nuten, ein zusätzliches Spulenvolumen in dem Teilbereich der Spule vorgesehen sein, der aus der Nut des Blechpakets herausragt, so dass in diesem freien Wickelvolumen eine definierte Ausgestaltung der Magnetspule erreichbar ist. Des Weiteren können Nasen und Führungsrippen eine definierte Formgebung der Spulenköpfe bewirken und erwünschte Abwinkelungen und Biegeradien der Spule vorgeben. Durch die Modifikation der Wicklungsunterstützungsoberfläche kann dem Draht mehr Raum zur Entfaltung gegeben werden, so dass beispielsweise eine Aussparung in der Wicklungsunterstützungsoberfläche über das Polhorn hinweg eine optimale Ausfüllung der Magnetspule und Definition der Wickellage erreicht werden kann, um ein homogenes und einstellbares Statormagnetfeld zu erzeugen. Hierzu können beispielsweise Aussparungen oder Nuten in der Wicklungsunterstützungsoberfläche vorgesehen sein, wobei diese Aussparungen nicht über die ganze Länge des Blechpakets vorgesehen sein müssen, da es sonst zu sogenannten Hinterwicklungen kommen kann.

Nach einer vorteilhaften Weitergestaltung der Vorrichtung kann das Spulenformgebungselement in Längsrichtung des Blechpakets ausgerichtet und nur teilweise über die Länge des Blechpakets, insbesondere am Anfang und Ende des Blechpakets entlang der Polhörner und an den Polhornenden ausgedehnt sein, oder seine Form entlang der Länge des Blechpakets variieren. So können nur an einzelnen und kritischen Stellen der Wicklungsunterstützungsoberfläche Spulenformgebungselemente vorgesehen sein, um einen möglichst homogenen Verlauf der Magnetspule entlang eines Großteils des Blechpakets zu ermöglichen. Nuten oder Kanten können entlang der Statorlängsachse in ihrer Höhe variieren, und insbesondere am Rand eine Verdickung der Magnetspule zulassen.

In einem nebengeordneten Aspekt schlägt die Erfindung ein Verfahren zur Bewicklung eines Blechpakets mittels einer Flyerwickelvorrichtung nach Anspruch 5 vor, wobei ein Spulendraht in einem Wicklungsspalt zwischen dem aus der Polnut herausragenden Bereich der Wicklungsoberfläche des Blechpakets und Wicklungsunterstützungsoberfläche der Gegenhalteeinrichtung gewickelt wird. Während des Wicklungsvorgangs kann zumindest ein Spulenformgebungselement der Wicklungsunterstützungsoberfläche die Wickellage des Spulendrahts bzw. die Form eines aus einer Nut ragenden Teilbereichs der Spule beeinflussen. Dabei ist vorgesehen, dass zwei oder mehr bewickelte Blechpakete zu einem Stator oder Läufer zusammengesetzt werden. Somit wird das direkte Bewickeln eines Blechpakets eines Stators oder Läufers vorgeschlagen, bei dem ein oder mehrere Spulenformgebungselemente auf einer Wicklungsunterstützungsoberfläche einer Gegenhalteeinrichtung die Wickellage des Spulendrahts beeinflussen, so dass eine magnetisch und mechanisch optimierte Spulenform erreicht werden kann. Magnetisch soll ein möglichst Längshomogenes und radial definiertes Magnetfeld erzeugbar sein, mechanisch sollen Spaltmaße, Baugrößen, Biegeradien und ähnliches für einen kompakten Motorenbau eingehalten sein. Insbesondere kann der Aufbau der Magnetspule außerhalb des aus der Polhornnut herausragenden Teilbereichs kompakt gestaltet werden, so dass sich die Spule nicht hoch aufbaut, sondern eine gewünschte Spulendicke und Querschnittsform einhält. Durch gezielte Ausnehmungen in der Wicklungsunterstützungsoberfläche, insbesondere an den Polhornenden, kann das Volumen der Magnetspule verdickt und somit eine optimale Magnetfeldausbildung gewährleistet werden.

Gemäß einer vorteilhaften Weiterentwicklung des Verfahrens kann nach Abschluss des Wicklungsvorgangs ein Verbacken der Spule erfolgen, insbesondere ein teilweises Verbacken. Nach dem Öffnen der Wicklungsvorrichtung besteht die Gefahr, dass sich der Draht aus dem Blechpaket löst, da keine Vorspannung mehr vorhanden ist. Durch ein Verbacken, insbesondere ein teilweises Verbacken, kann die Spule auf dem Polschuh fixiert werden, so dass ein Verschieben der einzelnen Spulendrähte oder der Wickellage verhindert werden. Dabei ist angestrebt, den Verbackungsgrad so gering wie möglich zu halten, da das Blechpaket im weiteren Prozess in der Regel noch höher beschichtet wird, und hierzu ein erneutes Aufheizen des Blechpakets notwendig wird. Hierzu kann die Wicklungsvorrichtung eine Heizvorrichtung zum Erwärmen des Blechpackets umfassen, so dass zumindest ein teilweises Verbacken der Spule erreicht werden kann. Der Verbackungsprozess kann bereits während des Wickelvorgangs erfolgen. So sieht ein Fertigungskonzept vor, dass die Spule nur teilweise verbacken wird, um die Fixierung für weitere Bearbeitungsschritte zu gewährleisten. Ein alternatives Konzept sieht vor, die Halteeinrichtung komplett aus der Bewicklungsvorrichtung auzuschleusen und in der Halteeinrichtung das vollständige Verbacken durchzuführen. Des weiteren kann im Folgeprozess die Spule vollständig beschichtet werde. Dadurch können aufwändige Verbackwerkzeuge eingespart werden, sowie der Platzbedarf der Produktionslinie wird reduziert. Durch das vorzeitige Komplettbeschichten ergibt sich des Weiteren der Vorteile einer verbesserten Isolation. Das Verbacken der Spule in der Wicklungsvorrichtung ist insbesondere aus dem Grund vorteilhaft, da beim Öffnen der Vorrichtung, d.h. dem Entfernen von Halte- und Gegenhalteeinrichtung ein Verlust der Vorspannung eintritt, und somit die Spule aufgehen würde. Da die Polschuhgeometrie bei Motoren für Elektrowerkzeuge oder anderen hochkompakten Motoren keine Fixierung der Spulen vorsehen, ist das Verbacken innerhalb der Vorrichtung zur Erhöhung der Qualität, Fertigungsgeschwindigkeit und Kostensenkung vorteilhaft.

Gemäß einer vorteilhaften Weiterbildung des Verfahrens können mittels eines Spulenformgebungselements ein oder mehrere Spulenköpfe vorgeformt werden. Hierzu können die Spulenformgebungselemente derart ausgestaltet werden, dass eine definierte Ausbildung, Ausrichtung und Krümmung des Spulendrahts im Bereich der Wickelköpfe erreicht werden kann. Somit ist ein nachträgliches Nacharbeiten bzw. mechanisches Umformen der Wickelköpfe nicht notwendig, so dass keine nachträglichen mechanischen Belastungen auf die Magnetspule auftreten und Arbeitsschritte verkürzt bzw. ausgelassen werden können.

Gemäß einem nicht zur Erfindung gehörenden Verfahren kann vor Beginn des Wicklungsvorgangs Isolierpapier in das Blechpaket eingelegt werden, und/oder eine Kunststofflage auf das Blechpaket aufgetragen werden. Das Einlegen von Isolierpapier verhindert insbesondere bei Kanten des Blechpakets einen elektrischen Kurzschluss und isoliert die Magnetspule gegenüber dem elektrisch leitenden Blechpaket. Altnernativ zum Einlegen von Isolierpapier oder zusätzlich kann eine Kunststoffumspritzung oder das Einlegen von Kunststoffschichten in das Blechpaket als Isolierung dient. Diese Kunststoffteile können zusätzlich noch weiter Funktionen übernehmen, wie z.B. die Aufnahme des ersten Drahtes sowie die Fixierung des Schrumpflauches der in einem Folgeprozess montiert wird. Die Kunststoffteile können dann in dem entsprechenden Wickelwerkzeug "saugend" aufgenommen. Das Einlegen kann händisch oder maschinell erfolgen, und bevorzugt nach Einspannen des Blechpakets in die Halteeinrichtung durchgeführt werden. Hierzu kann die Wicklungsvorrichtung einen Einlegeeinheit umfassen, die beispielsweise als Roboterarm ausgeformt ein maschinelles Einlegen des Isolierpapiers bzw. der Kunststoffteile ausführt bzw. die Kunststoffschicht aufspritzt. Das Isolierpapier kann an den Motor angepasste Längen und breiten haben die das Produkt, die Konstruktion und die elektrischen Normen fordern. Diese Maße sind im Einzelfall zu ermitteln und zu definieren. Dabei ist es vorteilhaft, wenn das Isolierpapier auf einer Papierpräge- bzw. Faltvorrichtung eine Vorprägung erfährt, hierdurch kann das Isolierpapier vereinfacht in die Nut einlegt werden und den Wickelraum besser auffüllen. Dadurch wird auch bei hohen Drahtzügen ein Einreißen des Isolierpapiers verhindert.

Gemäß einer weiteren vorteilhaften Weiterbildung des Verfahrens können im Laufe des Wicklungsvorgangs die Zugspannung und der Drahteinlaufwinkel, insbesondere im Einfädelbereich des Spulenformgebungselements, angepasst werden. Des Weiteren ist denkbar, die relative Lage von dem aus der Polnut herausragenden Bereich der Wicklungsoberfläche des Blechpakets und Wicklungsunterstützungsoberfläche der Gegenhalteeinrichtung im Laufe des Wicklungsvorgangs z.B. durch Verfahren, verdrehen oder verschwenken anzupassen. Durch Variation der Zugspannung, beispielsweise Entlastung der Zugspannung im Bereich hervorstehender Spulenformgebungselemente und Erhöhung der Zugspannung im Bereich von linearen Drahtverlegungsstrecken sowie Variation des Drahteinlaufwinkels, insbesondere bei Ausformung der Spulenköpfe, und Erhöhung des Abstands zwischen Halte- und Gegenhalteeinrichtung bei anwachsender Spulenhöhe, kann die Formgebung der Magnetspule optimiert und eine Beschädigung des Drahts verhindert werden.

In einem nebengeordneten Aspekt schlägt die Erfindung einen Elektromotor, insbesondere einen Reihen-, Neben- oder Doppelschluss-Wechselstrommotor vor, der einen Stator und/oder einen Läufer umfasst, der aus zumindest einem Blechpaket, insbesondere zwei oder mehrere Blechpakete zusammengesetzt ist. Die Blechpakete sind nach einem der vorgenannten Bewicklungsverfahren mit jeweils einer Magnetspule bewickelt, und der Elektromotor ist ausgelegt, um in einem Elektrowerkzeug, bevorzugt in einer handgeführten Elektrowerkzeugmaschine, wie einem Winkelschleifer, Bohrmaschine oder Bohrhammer, eingesetzt zu werden. Durch einen verbesserten Aufbau der gewickelten Magnetspule können elektrisch effiziente Elektromotoren vorgeschlagen werden, die bei geringerer Baugröße gleiche elektrische Leistung bringen und somit insbesondere bei handgeführten Elektrowerkzeugen zu einer Verkleinerung, Gewichtsersparnis und kompakteren Bauweise führen können.

Dementsprechend wird in einem weiteren erfinderischen Aspekt eine Elektrowerkzeugmaschine vorgeschlagen, die einen vorangehend beschriebenen Motor umfasst.

### Zeichnungen

Weitere Vorteile ergeben sich aus der vorliegenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
Fig. 1 in schematischer Darstellung ein Blechpaket mit Magnetspule sowie einen Stator nach einem ersten Ausführungsbeispiel der Erfindung;
Fig. 2 perspektivisch eine erfindungsgemäße Wickelvorrichtung zur Aufbringung einer Magnetspule auf ein Blechpaket;
Fig. 3 schematisch das Ausrichten von Halte- und Gegenhalteeinrichtung einer Wicklungsvorrichtung nach der Erfindung;
Fig. 4 zwei perspektivische Darstellungen des Wicklungsvorgangs eines Spulendrahts in eine Wicklungsnut nach einem erfindungsgemäßen Verfahren;
Fig. 5 in detaillierter Gegenüberstellung eine Verbesserung der Magnetspulenwicklungslage durch ein erfindungsgemäßes Verfahren;
Fig. 6 die Ausbildung einer Wicklungsunterstützungsoberfläche eines Ausführungsbeispiels einer erfindungsgemäßen Wicklungsvorrichtung.

In den Figuren sind gleiche oder gleichartige Komponenten mit gleichen Bezugszeichen beziffert.

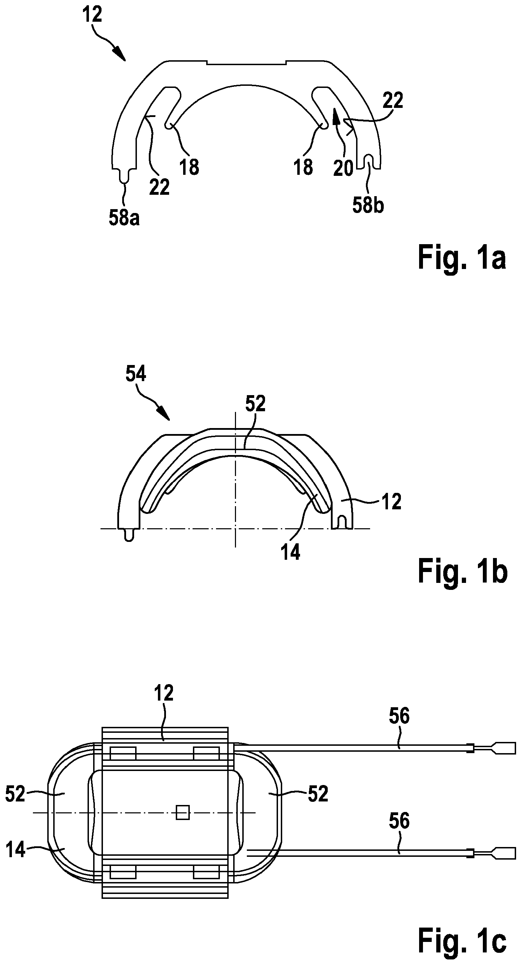

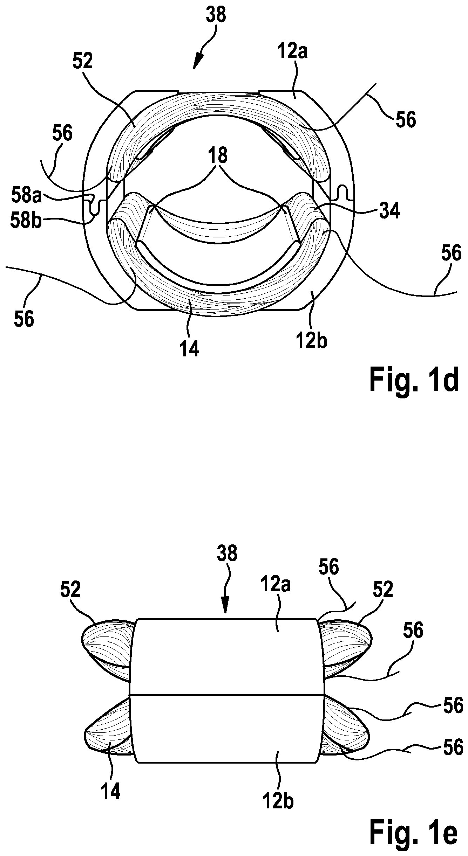

Fig. 1 zeigt in mehreren Teilfiguren 1A bis 1E den Aufbau eines Stators 38 aus zwei Blechpaketen 12, die über Verbindungselemente 58a, 58b in Form einer Nut-Feder-Verbindung miteinander formschlüssig verbunden werden können. Die beiden Statorhalbschalen 54 bestehen aus laminiertem Eisenblech, und weisen auf der Innenseite der Statoroberfläche Polhörner 18 auf, die mit der Innenoberfläche des Blechpakets 12 eine Polhornnut 20 ausbilden, in die Spulendrähte einer Magnetspule 14 eingelegt werden können. Hierbei definiert die Innenseite der Polhornnut 20 zusammen mit einer hierüber hinausgehenden Innenoberfläche des Blechpakets 12 eine Wicklungsoberfläche 22, an der sich das zu wickelnde Blechpaket 14 gegenüber dem Blechpaket 12 abstützt. Fig. 1A stellt den Querschnitt durch ein Statorblechpaket 12 einer Halbschale 54 eines Stators 38 dar. Fig. 1B zeigt in gleicher perspektivischer Ansicht eine Stirnansicht der Statorhalbschale 54 mit eingewickelter Magnetspule 14, wobei der Spulenkopf 52 deutlich erkennbar ist. Fig. 1C zeigt eine Längsansicht auf die Innenseite des Blechpakets 12 mit eingelegter Magnetspule 14, wobei die beiden symmetrisch aufgebauten Spulenköpfe 52 sichtbar sind. Die Magnetspule 14 weist Polanschlussleitungen 56 auf, die mittels Schrumpfschläuchen isoliert und Crimpkontakten versehen sind, um sie an die Motorelektronik einer Elektrowerkzeugmaschine anschließen zu können. In Fig. 1D ist ein zusammengebauter Stator 38 bestehend aus zwei mit Magnetspulen 14 versehenen Statorhalbschalen 52 dargestellt. Fig. 1E zeigt eine Seitenansicht des zweiteilig zusammengesetzten Stators 38.

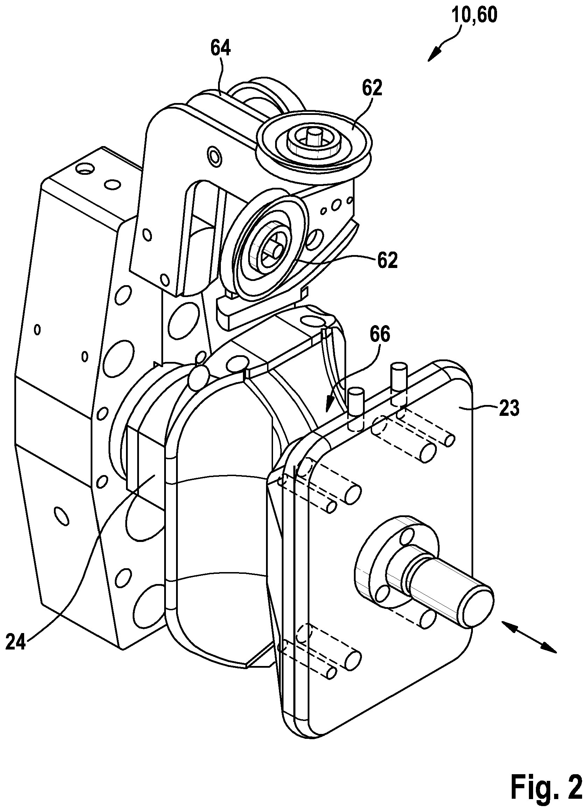

In der Fig. 2 ist in einer perspektivischen dreidimensionalen Ansicht eine Bewicklungsvorrichtung 10 als Flyerwickelvorrichtung 60 dargestellt. Die Flyerwickelvorrichtung 60 umfasst eine Halteeinrichtung 23, auf der ein Blechpaket 12, beispielsweise eine Statorhalbschale angeordnet werden kann. Des Weiteren ist eine Gegenhalteeinrichtung 24 vorgesehen, die eine Wicklungsunterstützungsoberfläche 26 aufweist, die im Wesentlichen formkomplementär zur Innenoberfläche des Blechpakets 12 der Statorhalbschale 54 ausgeformt ist. Die Wicklungsunterstützungsoberfläche 26 weist Spulenformgebungselemente in Form von Formgebungsnuten auf, die eine definierte Verteilung der Wickellage eines Spulendrahts im Laufe des Wicklungsvorgangs ermöglichen. Dieser Spulendraht wird über Drahtführungsräder 62 zugeführt, die in Lage und Wickelgeschwindigkeit mittels eines Flyerwickelarms 64 um Nuten des Blechpakets gewickelt werden können. Hierzu kann das System aus Halte- und Gegenhalteeinrichtung 23, 24 relativ zueinander gedreht werden, um ein Aufwickeln des Drahtes auf dem Blechpaket 12 zu ermöglichen. Alternativ kann der Flyerwickelarm 64 gegenüber dem fest stehenden Blechpaket 12 verdreht werden.

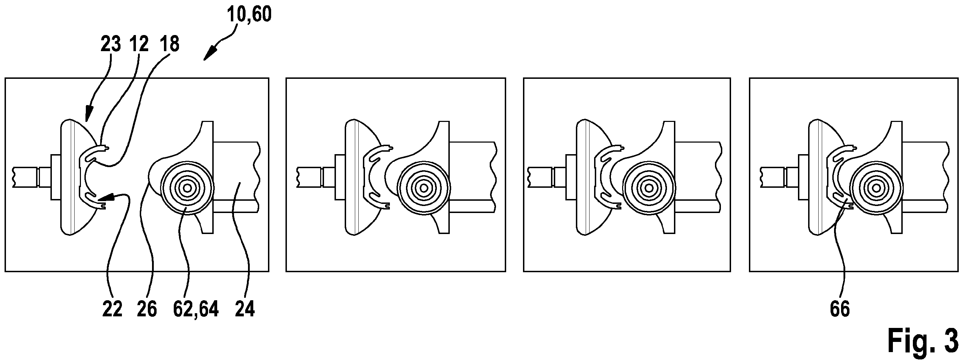

In Fig. 3 ist ein räumliches Verfahren einer Halteeinrichtung 23 einer Flyerwickelvorrichtung 60 gegenüber einer Gegenhalteeinrichtung 24 dargestellt, wodurch der aus der Polnut herausragenden Bereich der Wicklungsoberfläche 22 eines Blechpakets 12 gegen eine Wicklungsunterstützungsoberfläche 26 einer Gegenhalteeinrichtung 24 verfahren werden kann. Nach Ausbildung eines genügend engen Wickelspalts 66 kann ein Spulendraht über Drahtführungsräder 62 des Flyerwickelarms 64 in den durch die Polhornnut 20 des Blechpakets 12 sowie in den Spalt zwischen Wicklungsunterstützungsoberfläche 26 und dem aus der Polhornnut 20 herausragenden Innenflächenbereich des Blechpakets 12 definierten Wicklungsspalt 66 eingewickelt werden. Bei einer allmählichen Verdickung der Magnetspule kann der Abstand zwischen Halteeinrichtung 23 und Gegenhalteeinrichtung 24 vergrößert werden, und somit eine verbesserte Ausfüllung der Drahtanordnung innerhalb des Spulenquerschnitts erreicht werden. Der Spulendraht wird über Drahtführungsräder 62 aus einem Spulendrahtreservoir eingeführt, wobei die Drahtspannung und die Einführwinkel in dem Wickelspalt 66 variierbar sind.

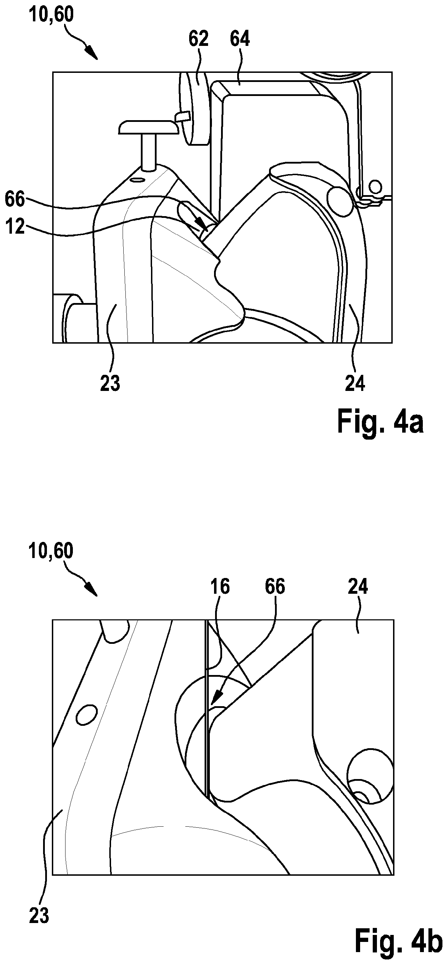

In den Fig. 4A und 4B ist in zwei unterschiedlichen Perspektivdarstellungen der Ablauf des Wicklungsvorgangs eines Spulendrahts 16 in einen Wickelspalt 66 zur Herstellung einer Magnetspule 14 auf den Polhörnern 18 eines Blechpakets 12 dargestellt. Der Spulendraht 16 wird über einen Flyerwickelarm 64 mit Drahtführungsrädern 62 geführt, mit einer definierten Zugspannung belastet und in den Wickelspalt 66 eingelassen, wo er in Polhornnuten 20 des Blechpakets 12 aufgewickelt wird, hierzu rotieren Halte- und Gegenhalteeinrichtung 23, 24 gegenüber dem Flyerwickelarm 64. Auf der Wicklungsunterstützungsoberfläche 26 der Gegenhalteeinrichtung 24 sind Spulenformgebungsnuten 42 in Form von Vertiefungen und Erhöhungen ausgeformt, die im Laufe des Einwicklungsvorgangs Lage und Ausrichtung des Spulendrahts zur Ausformung einer Magnetspule 14 optimiert beeinflussen. Nach Beendigung des Magnetspulenwicklungsvorgangs werden Halteeinrichtung 23 und Gegenhalteeinrichtung 24 voneinander getrennt, und das Blechpaket 12 herausgenommen und kann als Statorhalbschale 54 zum Aufbau eines Elektromotors mit einer weiteren formkomplementären Statorhalbschale 54 zusammengesetzt werden.

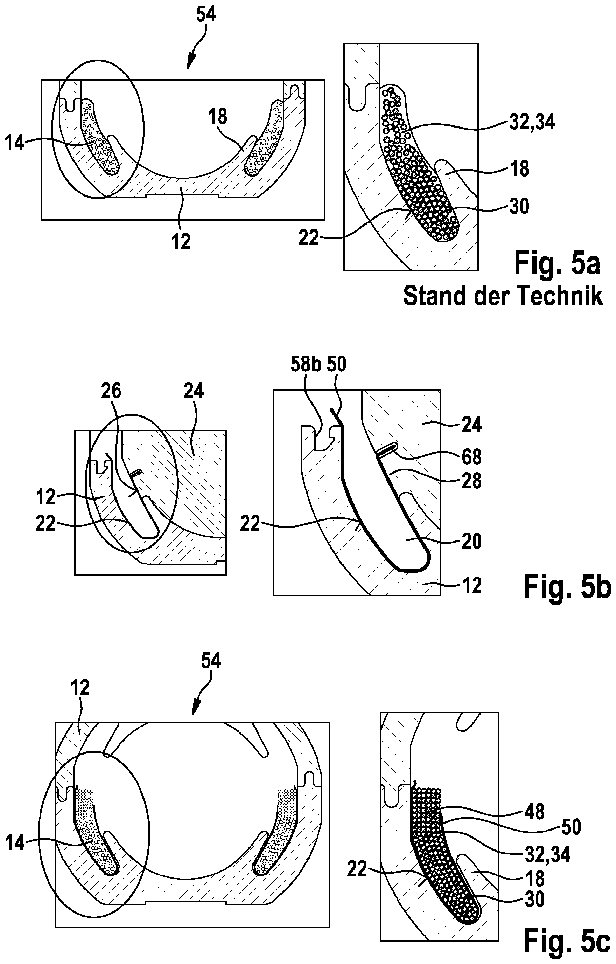

Fig. 5 zeigt in Schnitt- und Detailzeichnungen einen Spulenquerschnitt 30 einer Magnetspule 14 hergestellt nach dem Stand der Technik (Fig. 5A) und hergestellt mittels einer Ausführungsform einer erfindungsgemäßen Vorrichtung (Fig. 5C). In der Fig. 5A ist ein Querschnitt durch eine Statorhalbschale 54 dargestellt, die ein Blechpaket 12 umfasst, in der Polhornnuten 20 durch ein Polhorn 18 definiert sind, wobei ein Spulendraht 16 zur Ausbildung einer Magnetspule 14 in die Polhornnut 20 eingewickelt ist. Die Wickellage 32 der Magnetspule 14 ist im Bereich der Polhornnut 20 derart eingestellt, so dass die einzelnen Spulendrähte die Nut 20 vollständig ausfüllen. Im oberen Teilbereich des aus der Polhornnut 20 herausragenden Teilbereichs der Magnetspule 14 zeigt sich deutlich ein erhöhter und verjüngender Aufbau der Magnetspule 14, so dass das resultierende Magnetfeld inhomogen und nicht symmetrisch im Verlauf des Querschnitts der Magnetspule 14 erzeugt werden kann. Fig. 5B zeigt eine Modifikation der Wicklungsunterstützungsoberfläche 26 der Gegenhalteeinrichtung 24, die im Wesentlichen formkomplementär zur Innenoberfläche 22 des Blechpakets 12 ausgeformt ist. Zur definierten Positionierung eines Isolierpapiers 50, das im wesentlichen die Wicklungsoberfläche 22 des Blechpakets 12 gegenüber der Magnetspule 14 isoliert, ist in der Wicklungsunterstützungsoberfläche 26 ein Befestigungsspalt 68 ausgeformt, in den das Isolierpapier 50 während des Wickelvorgangs eingelegt und somit fixiert werden kann. Durch Ausbildung einer Spulenformgebungsnut 42 als Spulenformgebungselement 28 kann eine Verbreiterung des aus dem Polhorn herausgehenden Magnetspulenwickelvolumens erreicht werden. So zeigt Fig. 5C die Ausbildung einer Magnetspule14 mittels der in Fig. 5B dargestellten Konfiguration von Wicklungsunterstützungsoberfläche 26 mit Spulenformgebungselement 28. Deutlich ist zu erkennen, dass insbesondere der aus der Polhornnut 20 herausragende Teilbereich 34 der Magnetspule 14 nach oben durch eine Spulenquerschnittsverdickung 48 verstärkt ist. Hierdurch wird eine gleichmäßige und in sich symmetrische Ausgestaltung der Magnetspule 14 erreicht, und eine kompakte Bauweise des Stators bei homogenisiertem Statormagnetfeld ermöglicht.

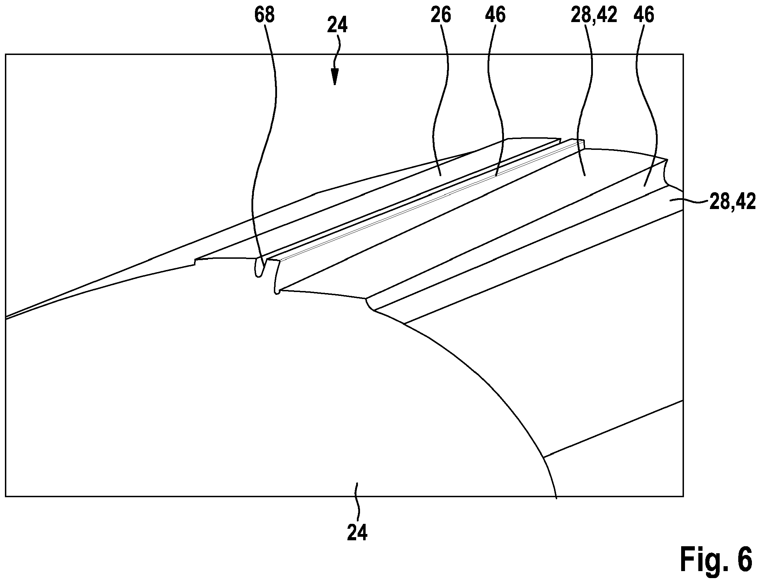

In der Fig. 6 ist perspektivisch eine Wicklungsunterstützungsoberfläche 26 einer Gegenhalteeinrichtung 24 nach einem Ausführungsbeispiel der Erfindung dargestellt. Die grundsätzlich als Zylinder-Außenmantel ausgestaltete Wicklungsunterstützungsoberfläche 26 weist insbesondere im Bereich der Polhörner eines Blechpakets, das auf einer Halteeinrichtung eingespannt sein kann, Spulenformgebungselemente 28 auf. Diese Spulenformgebungselemente 28 sind als Spulenformgebungsnuten 42 bzw. längliche Ausnehmungen ausgelegt, die über die Längserstreckung des Polhorns in ihrer Tiefe variieren, in diesem Fall schräg abfallend zum Ende des Polhorns hin ausgeformt sind. Hierdurch wird während des Drahteinwickelvorgangs eine Verdickung des Spulenquerschnitts der außerhalb der Nut verlegten Spulendrähte erreicht. In diesem Ausführungsbeispiel einer Wicklungsunterstützungsoberfläche 26 liegen zwei benachbarte Spulenformgebungsnuten 42 mit verschiedenen Tiefen nebeneinander, die durch abgerundete Kanten 46 abgestuft ineinander übergehen. Die Kanten 46 sind zur Vermeidung von Beschädigungen des Drahts während des Wicklungsvorgangs abgerundet, und bilden somit keine scharfen Eck- oder Kantenstellen.

Mittels der neuen Wicklungsvorrichtung und des neuen Wicklungsverfahrens kann eine deutliche Verbesserung des Motorspulenaufbaus sowie der Verdichtung der Spulendrähte erreicht werden. Durch ein "Vorbacken" des Spulendrahts kann eine Fixierung bereits während und/oder nach dem Wicklungsvorgang der Magnetspule erreicht werden. Form und Geometrie der Polhörner und des Polhornnutenverlaufs können für eine optimale Verdichtung der Spulendrähte und gesteuerten Querschnittsgestaltung der Magnetspule angepasst werden. Während des Wicklungsvorgangs kann bereits ein Verbacken der verlegten Drähte erfolgen. Hierdurch ist es möglich, bei gleicher Baugröße leistungsfähigere Statoren bzw. Läufer und damit leistungsfähigere, weniger fehleranfällige und langlebigere Motoren, insbesondere für den Betrieb in einer Elektrowerkzeugmaschine, bereitzustellen.

## Patentansprüche

1. Flyerwickelvorrichtung (10, 60) zur Bewicklung eines Blechpakets (12), das so ausgebildet ist, dass zwei oder mehr Blechpakete (12) zusammengesetzt einen Stator (38) oder Läufer ergeben, mit einer Magnetspule (14) für einen Elektromotor, wobei ein Flyerwickelarm (64) der Flyerwickelvorrichtung (10, 60) einen leitfähigen, isolierten Spulendraht (16) in eine oder mehrere Nuten, insbesondere Polhornnuten (20), einer Wicklungsoberfläche (22) des Blechpakets (12) einwickelt, umfassend eine Halteeinrichtung (23) zur Fixierung des zu bewickelnden Blechpakets (12) während des Wickelvorgangs und eine Gegenhalteeinrichtung (24), wobei zumindest eine Wicklungsunterstützungsoberfläche (26) der Gegenhalteeinrichtung (24) vorgesehen ist, die relativ zu dem aus der Nut, insbesondere der Polhornnut (20), herausragenden Bereich der Wicklungsoberfläche (22) des Blechpakets (12) verfahr- oder verschwenkbar ist, und die Wicklungsunterstützungsoberfläche (26) zumindest ein Spulenformgebungselement (28) aufweist, wodurch die Wickellage (32) des Spulendrahts (16) bzw. eine Form eines aus der Nut, insbesondere der Polhornnut (20), ragenden Teilbereichs der Magnetspule (14) während des Wicklungsvorgangs vorgebbar ist, **dadurch gekennzeichnet, dass** zur definierten Positionierung eines Isolierpapiers (50), das im Wesentlichen die Wicklungsoberfläche (22) des Blechpakets (12) gegenüber der Magnetspule (14) isoliert, in der Wicklungsunterstützungsoberfläche (26) ein Befestigungsspalt (68) ausgeformt ist, in den das Isolierpapier (50) während des Wickelvorgangs einlegbar und somit fixierbar ist.

2. Flyerwickelvorrichtung (10, 60) nach Anspruch 1, **dadurch gekennzeichnet, dass** das Spulenformgebungselement (28) eine Nut (42), eine Rippe (44), einen Spalt (68), eine Vertiefung, einen Absatz, eine Nase oder ähnliches umfasst, wobei bevorzugt das Spulenformgebungselement (28) abgerundete Ecken und Kanten (46) aufweist.

3. Flyerwickelvorrichtung (10, 60) nach einem der vorangegangenen Ansprüche, **dadurch gekennzeichnet, dass** das Spulenformgebungselement (28) derart ausgeformt ist, dass eine Verdickung des Spulenquerschnitts (30) des aus der Nut, insbesondere der Polhornnut (20), ragenden Teilbereichs (34) der Spule (14) erreichbar und/oder eine Ausrichtung und Formgebung eines oder mehrerer Spulenköpfe (52) bewirkbar ist, indem die Gegenhalteeinrichtung (24) relativ zu dem aus der Polnut (18) herausragenden Bereich der Wicklungsoberfläche (22) des Blechpakets (12) verfahr- oder verschwenkbar ist.

4. Flyerwickelvorrichtung (10, 60) nach einem der vorangegangenen Ansprüche, **dadurch gekennzeichnet, dass** das Spulenformgebungselement (28) in Längsrichtung des Blechpaketes (12) ausgerichtet und nur teilweise über die Länge des Blechpakets (12), insbesondere am Anfang und Ende des Blechpakets (12) entlang von Polhörnern ausgedehnt ist oder seine Form entlang der Länge des Blechpakets variiert.

5. Verfahren zur Bewicklung eines Blechpakets (12) mittels einer Flyerwickelvorrichtung (10, 60) umfassend eine Halteeinrichtung (23) zur Fixierung des zu bewickelnden Blechpakets (12) während des Wickelvorgangs und eine Gegenhalteeinrichtung (24) mit zumindest einer Wicklungsunterstützungsoberfläche (26), wobei ein leitfähiger, isolierter Spulendraht (16) in einen Spalt (66) zwischen dem aus einer Nut, insbesondere einer Polhornnut (20), herausragenden Bereich der Wicklungsoberfläche (22) des Blechpakets (12) und der Wicklungsunterstützungsoberfläche (26) der Gegenhalteeinrichtung (24) gewickelt wird, wobei während des Wicklungsvorgangs zumindest ein Spulenformgebungselement (28) der Wicklungsunterstützungsoberfläche (26) die Wickellage (32) des Spulendrahts (16) bzw. die Form eines aus der Nut, insbesondere der Polhornnut (20), ragenden Teilbereichs (34) einer Magnetspule (14) vorgibt, und wobei zwei oder mehr bewickelte Blechpakete (12) zu einem Stator (38) oder Läufer zusammengesetzt werden, **dadurch gekennzeichnet, dass** zur definierten Positionierung eines Isolierpapiers (50), das im Wesentlichen die Wicklungsoberfläche (22) des Blechpakets (12) gegenüber der Magnetspule (14) isoliert, in der Wicklungsunterstützungsoberfläche (26) ein Befestigungsspalt (68) ausgeformt ist, in den das Isolierpapier (50) während des Wickelvorgangs eingelegt und somit fixiert wird.

6. Verfahren nach Anspruch 5, **dadurch gekennzeichnet, dass** nach Abschluss des Wicklungsvorgangs ein Verbacken der Magnetspule (14) erfolgt, insbesondere ein teilweises Verbacken erfolgt.

7. Verfahren nach Anspruch 5 oder 6, **dadurch gekennzeichnet, dass** mittels des Spulenformgebungselements (28) ein oder mehrere Spulenköpfe (52) vorgeformt werden.

8. Verfahren nach einem der Ansprüche 5 bis 7, **dadurch gekennzeichnet, dass** vor Beginn des Wicklungsvorgangs eine Kunststofflage auf das Blechpaket aufgetragen wird.

9. Verfahren nach einem der Ansprüche 5 bis 7, **dadurch gekennzeichnet, dass** im Laufe des Wicklungsvorgangs die Zugspannung und der Drahteinlaufwinkel insbesondere in einem Einfädelbereich des Spulenformgebungselements (28) angepasst wird.

## Claims

1. Flyer winding device (10, 60) for winding a laminated core (12) which is embodied in such a way that two or more laminated cores (12) combine to form a stator (38) or rotor, having a solenoid (14) for an electric motor, wherein a flyer winding arm (64) of the flyer winding device (10, 60) winds a conductive, insulated coil wire (16) into one or more grooves, in particular pole horn grooves (20), of a winding service (22) of the laminated core (12), comprising a securing device (23) for securing the laminated core (12) to be wound, during the winding process and a counterholding device (24), wherein at least one winding support surface (26) of the counterholding device (24) is provided, which winding support surface (26) can be moved or pivoted in relation to that region of the winding surface (22) of the laminated core (12) which projects out of the groove, in particular of the pole horn groove (20), and the winding support surface (26) has at least one coil-shaping element (28), as a result of which the winding layer (32) of the coil wire (16) or a shape of a partial region, projecting out of the groove, in particular out of the pole horn groove (20), of the solenoid (14) can be predefined during the winding process, **characterized in that** in order to position an insulating paper (50) in a defined fashion, which insulating paper (50) essentially insulates the winding surface (22) of the laminated core (12) with respect to the solenoid (14), an attachment gap (68) is formed in the winding support surface (26), into which attachment gap (68) the insulating paper (50) can be placed and therefore secured during the winding process.

2. Flyer winding device (10, 60) according to Claim 1, **characterized in that** the coil-shaping element (28) has a groove (42), a fin (44), a gap (68), a depression, a shoulder, a projection or the like, wherein the coil-shaping element (28) preferably has rounded corners and edges (46).

3. Flyer winding device (10, 60) according to one of the preceding claims, **characterized in that** the coil-shaping element (28) is shaped in such a way that thickening of the coil section (30) of that partial region (34) of the coil (14) which projects out of the groove, in particular out of the pole horn groove (20) can be achieved, and/or orientation and shaping of one or more coil heads (52) can be brought about by moving or pivoting the counterholding device (24) in relation to that region of the winding surface (22) of the laminated core (12) which projects out of the pole groove (18).

4. Flyer winding device (10, 60) according to one of the preceding claims, **characterized in that** the coil-shaping element (28) is oriented in the longitudinal direction of the laminated core (12) and is made to extend along pole horns over only part of the length of the laminated core (12), in particular at the start and end of the laminated core (12), or varies its shape along the length of the laminated core.

5. Method for winding a laminated core (12) by means of a flyer winding device (10, 60), comprising a holding device (23) for securing the laminated core (12) to be wound, during the winding process and a counterholding device (24) having at least one winding support surface (26), wherein a conductive, insulated coil wire (16) is wound into a gap (66) between that region of the winding surface (22) of the laminated core (12) which projects out of a groove, in particular out of a pole horn groove (20), and the winding support surface (26) of the counterholding device (24), wherein during the winding process at least one coil-forming element (28) of the winding support surface (26) predefines the winding layer (32) of the coil wire (16) or the shape of a partial region (34), projecting out of the groove, in particular out of the pole horn groove (20), of a solenoid (14), and wherein two or more wound laminated cores (12) are combined to form a stator (38) or rotor, **characterized in that** in order to position an insulating paper (50) in a defined fashion, which insulating paper (50) essentially insulates the winding surface (22) of the laminated core (12) with respect to the solenoid (14), an attachment gap (68) is formed in the winding support surface (26), into which attachment gap (68) an insulating paper (50) is placed and therefore secured during the winding process.

6. Method according to Claim 5, **characterized in that** after the termination of the winding process, the solenoid (14) is baked, in particular partial baking takes place.

7. Method according to Claim 5 or 6, **characterized in that** one or more coil heads (52) are pre-formed by means of the coil-shaping element (28).

8. Method according to one of Claims 5 to 7, **characterized in that** a plastic layer is applied to the laminated core before the start of the winding process.

9. Method according to one of Claims 5 to 7, **characterized in that** in the course of the winding process the tensile stress and the wire entry angle are adapted, in particular in a feeding-in region of the coil-shaping element (28).

## Revendications

1. Dispositif d'enroulement à volant (10, 60) pour l'enroulement d'un paquet de tôles (12) qui est réalisé de telle sorte que deux ou plus de deux paquets de tôles (12) produisent ensemble un stator (38) ou un rotor, avec une bobine magnétique (14) pour un moteur électrique, un bras d'enroulement de volant (64) du dispositif d'enroulement à volant (10, 60) enroulant un câble de bobine conducteur isolé (16) dans une ou plusieurs rainures, en particulier dans des rainures de cornes polaires (20), d'une surface d'enroulement (22) du paquet de tôles (12), comprenant un dispositif de retenue (23) pour fixer le paquet de tôles (12) à enrouler pendant l'opération d'enroulement et un dispositif de retenue conjugué (24), au moins une surface de support d'enroulement (26) du dispositif de retenue conjugué (24) étant prévue, laquelle peut être déplacée ou pivotée par rapport à la région de la surface d'enroulement (22) du paquet de tôles (12) qui dépasse hors de la rainure, en particulier de la rainure de corne polaire (20), et la surface de support d'enroulement (26) présentant au moins un élément de formage de bobine (28), de sorte que la position d'enroulement (32) du câble de bobine (16) ou une forme d'une région partielle de la bobine magnétique (14) dépassant hors de la rainure, en particulier de la rainure de corne polaire (20), puisse être prédéfinie pendant l'opération d'enroulement, **caractérisé en ce que** pour le positionnement défini d'un papier isolant (50) qui isole sensiblement la surface d'enroulement (22) du paquet de tôles (12) par rapport à la bobine magnétique (14), une fente de fixation (68), dans laquelle le papier isolant (50) peut être introduit et donc fixé pendant l'opération d'enroulement, est formée dans la surface de support d'enroulement (26).

2. Dispositif d'enroulement à volant (10, 60) selon la revendication 1, **caractérisé en ce que** l'élément de formage de bobine (28) comprend une rainure (42), une nervure (44), une fente (68), un renfoncement, un épaulement, un ergot ou similaire, l'élément de formage de bobine (28) présentant de préférence des coins et des arêtes arrondis (46).

3. Dispositif d'enroulement à volant (10, 60) selon l'une quelconque des revendications précédentes, **caractérisé en ce que** l'élément de formage de bobine (28) est conçu de telle sorte qu'un épaississement de la section transversale de bobine (30) de la région partielle (34) de la bobine (14) sortant de la rainure, en particulier de la rainure de corne polaire (20), puisse être atteint et/ou qu'une orientation et un formage d'une ou plusieurs têtes de bobine (52) puisse être réalisé, par le fait que le dispositif de retenue conjugué (24) peut être déplacé ou pivoté par rapport à la région de la surface d'enroulement (22) du paquet de tôles (12) dépassant hors de la rainure polaire (18).

4. Dispositif d'enroulement à volant (10, 60) selon l'une quelconque des revendications précédentes, **caractérisé en ce que** l'élément de formage de bobine (28) est orienté dans la direction longitudinale du paquet de tôles (12) et est étiré seulement en partie sur la longueur du paquet de tôles (12), en particulier au début et à la fin du paquet de tôles (12) le long de cornes polaires, ou sa forme varie le long de la longueur du paquet de tôles.

5. Procédé d'enroulement d'un paquet de tôles (12) au moyen d'un dispositif d'enroulement à volant (10, 60) comprenant un dispositif de retenue (23) pour fixer le paquet de tôles (12) à enrouler pendant l'opération d'enroulement et un dispositif de retenue conjugué (24) avec au moins une surface de support d'enroulement (26), un câble de bobine conducteur isolé (16) étant enroulé dans une fente (66) entre la région de la surface d'enroulement (22) du paquet de tôles (12) dépassant hors d'une rainure, en particulier d'une rainure de corne polaire (20), et la surface de support d'enroulement (26) du dispositif de retenue conjugué (24), au moins un élément de formage de bobine (28) de la surface de support d'enroulement (26), prédéfinissant pendant l'opération d'enroulement la position d'enroulement (32) du câble de bobine (16) ou la forme d'une région partielle (34) d'une bobine magnétique (14) sortant de la rainure, en particulier de la rainure de corne polaire (20), et deux ou plus de deux paquets de tôles enroulés (12) étant réunis pour former un stator (38) ou un rotor, **caractérisé en ce que** pour le positionnement défini d'un papier isolant (50) qui isole sensiblement la surface d'enroulement (22) du paquet de tôles (12) par rapport à la bobine magnétique (14), une fente de fixation (68), dans laquelle le papier isolant (50) est introduit et donc fixé pendant l'opération d'enroulement, est formée dans la surface de support d'enroulement (26) .

6. Procédé selon la revendication 5, **caractérisé en ce qu'**à l'issue de l'opération d'enroulement, un collage de la bobine magnétique (14) est effectué, en particulier un collage partiel.

7. Procédé selon la revendication 5 ou 6, **caractérisé en ce qu'**une ou plusieurs têtes de bobine (52) sont préformées au moyen de l'élément de formage de bobine (28).

8. Procédé selon l'une quelconque des revendications 5 à 7, **caractérisé en ce qu'**avant le début de l'opération d'enroulement, une couche de plastique est appliquée sur le paquet de tôles.

9. Procédé selon l'une quelconque des revendications 5 à 7, **caractérisé en ce qu'**au cours de l'opération d'enroulement, la tension de traction et l'angle d'entrée du câble sont adaptés, en particulier dans une région d'enfilage de l'élément de formage de bobine (28).
